# EUROPÄISCHE PATENTSCHRIFT

(11) **EP 2 018 624 B1**
(45) Veröffentlichungstag und Bekanntmachung des Hinweises auf die Patenterteilung: **02.01.2013**
(21) Anmeldenummer: 07723655.2
(22) Anmeldetag: 23.03.2007
(51) Int. Cl.: G06K 7/10

(54) **VORRICHTUNG UND VERFAHREN ZUR ERFASSUNG UND/ODER ERKENNUNG VON MARKIERUNGEN IN/AN/AUF TRANSPARENTEN MARKIERUNGSTRÄGERN**
DEVICE AND METHOD FOR DETECTING AND/OR RECOGNIZING MARKINGS IN/AT/ON TRANSPARENT MARKING CARRIERS
DISPOSITIF ET PROCEDE DE DETECTION ET/OU DE RECONNAISSANCE DE MARQUAGES DANS/SUR DES SUPPORTS DE MARQUAGE TRANSPARENTS

(30) Priorität: 09.05.2006 DE 102006021793
(43) Veröffentlichungstag der Anmeldung: 28.01.2009
(73) Patentinhaber: boraident GmbH, 06118 Halle/Saale (DE)
(72) Erfinder: REDMANN, Frank, 06114 Halle (DE); KÜRBITZ, Steffen, 06120 Halle (DE); RAINER, Thomas, 38855 Wernigerode (DE); BOREK, Reinhard, 06110 Halle (DE)
(74) Vertreter: Cohausz Hannig Borkowski Wißgott
(86) Internationale Anmeldenummer: PCT/EP2007/002709
(87) Internationale Veröffentlichungsnummer: WO 2007/128372

(56) Entgegenhaltungen:
- WO-A-01/73677
- US-A1- 2001 000 010
- US-A1- 2004 206 819

## Beschreibung

Die Erfindung bezieht sich auf eine Vorrichtung zur Erfassung und/oder Erkennung von Markierungen umfassend eine Kamera zur Aufnahme der Markierung und wenigstens eine Beleuchtungsvorrichtung zur Beleuchtung einer Markierung in oder an oder auf transparenten Markierungsträgern, wie z.B. Glasscheiben. Die Erfindung bezieht sich weiterhin auf ein Verfahren zur Erfassung und/oder Erkennung von Markierungen, bei der eine beleuchtete Markierung mit einer Kamera aufgenommen wird.

Im Stand der Technik ist es bekannt, transparente Medien, wie z.B. Glas, insbesondere Floatglas mit Markierungen zu versehen. Neben Designaspekten werden solche Markierungen häufig eingesetzt zur Produktkennzeichnung oder als Prüfmarkierung. Insbesondere die letztgenannten Markierungen weisen dabei z.B. einen maschinencodierten Inhalt auf, der über die Produktionscharge informiert oder Angaben über den Herstellungs- oder Bearbeitungsprozess oder -prozessfortschritt gibt, insbesondere bei der Herstellung von Einscheibensicherheitsglas.

Markierungen, insbesondere mit maschinencodiertem Inhalt (z.B. in Form von Datamatrixcodes oder Barcodes) auf, an oder in transparenten Materialien, wie z.B. Glas sind auf Grund der Transparenz des Materials nur in Abhängigkeit von der Existenz eines geeigneten Hintergrundes (z.B. weißes Blatt Papier) von herkömmlichen Lesegeräten zu identifizieren/zu decodieren auch wenn die eigentliche Färbung der Markierung maximal, z.B. schwarz ist. Das Problem der Erkennbarkeit von Markierungen an, auf oder in transparenten Materialien ist im Wesentlichen abhängig von der Realisierung eines geeigneten Kontrastverhältnisses zwischen Markierung und Hintergrund und somit von der Absorption bzw. Reflexion bei der Markierung gegenüber der Absorption bzw. Reflexion beim Hintergrund.

Besonders problematisch wird die maschinelle Erfassung und oder Erkennung bzw. Identifizierung wenn die Färbung/Absorption einer Markierung sehr schwach/klein ist. Selbst bei Schaffung eines idealen Hintergrundes sind solche Markierungen mit schwachem Kontrast nicht oder zumindest nur sehr schwer maschinell erfassbar bzw. erkennbar. Dieser Fall der Markierung mit schwachem Kontrast ist jedoch der häufigste Fall bei der Markierung von transparenten Materialien, da, insbesondere aus ästhetischen Gründen, solche Markierungen an transparenten Materialien möglichst unauffällig sein sollen, gerade wenn z.B. ein markiertes Glas später einen Sichtbereich bildet, z.B. bei einem Fenster oder einer Autoscheibe.

Zur Markierung von transparenten Medien, insbesondere von Floatglas sind im Stand der Technik verschiedene Möglichkeiten bekannt. Z.B. die Bedruckung der Oberfläche oder die Zerstörung der Oberfläche durch Ätzung, Ritzung oder Laserbeschriftung. Derartige Markierungen bieten zwar oftmals einen hohen Kontrast, sind jedoch trotzdem nicht mit herkömmlichen Lesegeräten maschinell erfassbar.

Ein durch die Anmelderin dieser Erfindung praktiziertes und am Markt etabliertes Verfahren betrifft eine Markierung die dadurch hergestellt wird, dass ein metallionenhaltiges, insbesondere silberionenhaltiges Spendermedium, insbesondere eine Spenderfolie an eine Seite, insbesondere die Badseite eines Floatglases angepresst wird, wobei durch Absorption eines Laserstrahles, der z.B. durch das Spendermedium das Glas beleuchtet, ggfs. beschreibt, das Spendermedium und das Glas erwärmt wird und so Metallionen, insbesondere Silberionen in das Glas eingetauscht und im Glas Metall-, insbesondere Silberpartikel gebildet werden. Danach wird das Spendermedium, insbesondere die Folie entfernt und es verbleiben Verbrennungsrückstände und eine wenige Hundert Nanometer dünne sehr stabile Schicht atomaren Metalls, insbesondere Silber auf der Glasoberfläche. Eine solche Markierung besitzt wegen der Verbrennungsrückstände einen hohen Kontrast und sind bei einem geeigneten Hintergrund maschinenlesbar. Eine solche Markierung kann einem Waschprozess unterzogen werden, d.h. die Glasscheibe wird unmittelbar nach der Markierung und im weiteren Verarbeitungsprozess Waschprozessen unterworfen. Dadurch werden die Verbrennungsrückstände auf der Glasoberfläche entfernt und der Kontrast der Markierung sinkt stark. Der Kontrast der Markierung wird jetzt vornehmlich durch die Schicht atomaren Metalls, z.B. Silber auf dem Glas und in geringerem Maße durch die geringe Absorption der Silberpartikel im Glas gebildet. Eine solche Markierung ist mit herkömmlichen Vorrichtungen nicht lesbar.

Bei der Herstellung von Einscheibensicherheitsglas wird am Ende des Glasverarbeitungsprozesses das Glas thermisch vorgespannt d.h. z.B. kurzzeitig einer Temperatur von ca. 700°C ausgesetzt und dann abgeschreckt, so dass Druckspannungen in Glasoberfläche einfrieren. Die Markierung, die wie zuvor beschrieben hergestellt ist besitzt für diesen Prozess eine Prüfeigenschaft. Durch den Erwärmungsprozess verändert sie ihre Farbe von hellbraun zu hellgelb und wird dadurch etwas kontrastreicher. Eine solche Markierung ist aber aufgrund des Farbtones mit bislang erhältlichen kommerziellen Lesegeräten, die hauptsächlich bei einer Wellenlänge von ca. 635 nm arbeiten, auch nicht maschinenlesbar.

In dem der Erfindung hauptsächlich zugrunde liegenden konkreten Anwendungsfall handelt es sich somit um Markierungen, die sich dicht unter der zinnhaltigen Glasoberfläche einer Float-Glasscheibe (Badseite) befinden und metallinsbesondere silberpartikelhaltige Glasbereiche umfassen. Hierbei kann eine zu lesende Codierung in den Glasbereichen vorhanden sein, z.B. als Datamatrixcode oder als Barcode oder als sonstiger Code. Diese Markierungen sind bei normalem Umgebungslicht sehr schlecht mit dem Auge und maschinell nicht zu erkennen. Die Erfindung betrifft jedoch nicht nur diesen konkreten Anwendungsfall, sondern auch andere Markierungen auf transparenten Medien, wie z.B. Glasscheiben oder anderen Glaselementen oder -bauteilen.

Allgemein sind zur Erfassung und/oder Erkennung von Markierungen im Stand der Technik Lesegeräte bekannt, die z.B. eine Kamera und eine Beleuchtungsvorrichtung, z.B. eine Lasereinheit zur Identifizierung von Maschinencodes umfassen. Z.B. kennt man von Supermarktkassen Handgeräte, die einen Laserstrahl aussenden und dessen unmittelbaren Reflex z.B. mittels einer Decodiersoftware auswerten, um Barcodes oder EAN-Codes zu lesen.

Solche Vorrichtungen benötigen jedoch immer einen nichttransparenten Hintergrund der Markierung um einen ausreichenden Kontrast der Markierung und damit eine Erkennbarkeit zu gewährleisten. Sie benötigen weiterhin immer eine diffus reflektierende Oberfläche des gekennzeichneten Materials, damit nicht die direkten Reflexe der Beleuchtung das Kamerabild überstrahlen. Aus diesem Grund befinden sich bei bekannten Vorrichtungen die Codes als schwarze Schrift auf weißen Untergrund und bieten somit optimalen Kontrast.

Derartige Geräte sind für die Erfassung von den zuvor beschriebenen Markierungen, insbesondere solchen nach dem zuvor beschriebenen Verfahren nicht verwendbar, da die transparenten Oberflächen, insbesondere die quasi spiegelnden Oberflächen, insbesondere von Floatglas mit einer feuerpolierten Oberfläche einen zu starken Oberflächenreflex erzeugen, so dass die Codes hieraus nicht diskriminiert werden können.

WO 01/73677 offenbart eine Vorrichtung gemäß dem Stand der Technik.

Aufgabe der Erfindung ist es, eine Vorrichtung der eingangs genannten Art zum Erfassen und/oder Erkennen von Markierungen auch mit schwachem Kontrastverhältnis bereitzustellen, insbesondere für solche Markierungen, die wie zuvor beschrieben hergestellt wurden, insbesondere so, dass während des Erfassens / Erkennens der schwache Kontrast derart erhöht wird, dass eine Maschinenlesbarkeit gegeben ist. Die Erfindung betrifft somit besonders, jedoch nicht nur das Lesen von Markierungen aus Metallionen und/oder Metallpartikeln auf/an/in der badseitigen Oberfläche von Floatgläsern vor und/oder nach einem Prozess der Wärmebehandlung zur Herstellung von Einscheiben-Sicherheitsglas.

Gelöst wird diese Aufgabe durch ein System nach Anspruch 1. zur manuellen und ein Verfahren nach Anspruch 10.

Wesentlicher Kerngedanke bei dem erfindungsgemäßen System und bei dem Verfahren ist es ist es, dass mittels den Dioden eine Beleuchtung des Erfassungsbereiches der Kamera in der Vorrichtung unter einem Winkel zur optischen Achse der Kamera erfolgt, so dass ein direkter Reflex des an der Oberfläche eines Markierungsträgers reflektierten Lichtes im von der Kamera erfassten Bild der Markierung von der dargestellten Markierung zumindest getrennt ist, selbst wenn der Reflex selbst noch im erfassten Bild zu erkennen ist. Da so eine Überlagerung zwischen dem direkten Reflex und dem Abbild der Markierung verhindert wird, kann mittels einer Bildverarbeitungssoftware und/oder Decodiersoftware aus dem aufgenommenen Bild die Markierung ausgewertet werden.

Insbesondere bei planparallelen Markierungsträgern, wie Glasscheiben wird weiterhin auch verhindert, dass ein Reflex von der zweiten Scheibenseite das Abbild der Markierung überlagert.

Gemäß einem Beispiel ist es, wenn die Anordnung von Dioden und Kamera sowie der Abstand der Kamera zur Oberfläche des Markierungsträgers derart ist, dass der Lichtreflex zumindest im Wesentlichen ausserhalb der Objektivöffnung der Kamera angeordnet ist. So wird der Reflex vorzugsweise gar nicht erst erfasst. Teilweise kann dies in der Praxis nicht vollständig erreicht werden, da Dioden üblicherweise nicht einen einzelnen gerichteten Lichtstrahl aussenden, sondern Licht in einem Kegel oder einem bestimmten Querschnittsprofil aussenden. Es kann mit dieser Ausführung zumindest erreicht werden, dass der Reflex des intensitätsstärksten, insbesondere mittigen Lichtstrahles des Lichtkegels / -profils ausserhalb der Objektivöffnung liegt. Verbleibende Reflexanteile liegen sodann zumindest nicht überlagernd auf der Abbildung der Markierung oder sind zumindest ausreichend gering, so dass eine Diskriminierung der Abbildung der Markierung gegenüber dem Reflex erfolgen kann.

Bevorzugt wird die Anordnung der Dioden so sein, dass das Licht im wesentlichen streifend zur Oberfläche des Markierungsträgers verläuft. Diesbezüglich und auch bei weiteren späteren Nennungen von Richtungen und Winkeln wird dabei Bezug genommen auf einen angenommenen zentralen Lichtstrahl im Abstrahlungsprofil einer Diode, selbst wenn diese einen Lichtkegel mit einem bestimmten Öffnungswinkel ausstrahlt. Hierbei ist ein Lichtkegel bzw. Abstrahlungsprofil einer Diode sowie der Abstand der Diode zur Markierung bevorzugt so gewählt, dass eine zu erfassende Markierung vollflächig beleuchtet wird.

Durch diese Art der Beleuchtung wird die Markierung im Wesentlichen invertiert, d.h. die dunklen Markierungspixel werden hell und der Hintergrund verliert seine (helle) Transparenz und wird schwarz. Dies ist deshalb so, weil im Idealfall kein Licht, welches vom transparenten Träger reflektiert wird, den Weg ins Objektiv der Kamera findet. Der transparente Markierungsträger erscheint somit für die Kamera in Bereichen, wo keine Markierung angeordnet ist, dunkel. In Bereichen einer Markierung streuen jedoch die Markierungspartikel das einfallende Licht auch in Richtung der Kamera, so dass die Markierungen hell erscheinen und zum dunklen Hintergrund einen optimalen Kontrast aufweisen.

Die Dioden sind in einem Abstand zur optischen Achse der Kamera und in einem Winkel von 0 bis 80 Grad, bevorzugt 0 bis 45 Grad zur Oberfläche des Markierungsträgers angeordnet, so dass die Dioden unter diesem Winkel zumindest die Markierungsfläche, bevorzugt den ganzen Erfassungsbereich der Kamera auf dem Markierungsträger beleuchtet.

Gemäß der Erfindung sind die Leuchtdioden und/oder Laserdioden in einem, insbesondere für alle Dioden gleichen radialen Abstand um die optische Achse der Kamera herum angeordnet sind. So kann bei einer solchen Anordnung mit mehreren Dioden eine Markierung im Erfassungsbereich einer Kamera aus verschiedenen Richtungen beleuchtet werden, wobei mehr Licht gestreut und so der Kontrast zum dunklen Hintergrund weiter erhöht werden kann. Ja nach Anzahl der Dioden können diese rahmenartig die optische Achse umgeben, wobei bei einem für alle Dioden gleichen radialen Abstand von der optischen Achse die Dioden etwa ringförmig bzw. auf einem Kreis liegend die optische Achse der Kamera umgeben. Besonders bevorzugt kann der Winkel jeder Diode zur Oberfläche des Markierungsträgers gleich sein, insbesondere derart, dass die Mittenstrahlen der Beleuchtungskegel jeder Diode die optische Achse der Kamera in demselben Punkt schneiden.

So werden konstruktiv besonders einfach die vorgenannten Bedingungen erfüllt, wenn in ein solches Aufnahmeelement die Kamera und Dioden in die dafür vorgesehenen Ausnehmungen / Bohrungen eingesetzt werden, wobei die Kamera derart eingesetzt wird, dass das Objektiv ins Innere des Topfes weist ebenso wie die Dioden.

Der Topf kann dabei jeden beliebigen Querschnitt aufweisen, insbesondere mehreckig oder rund, z.B. viereckig, wobei zumindest in einer Teilwand der Topfwandung eine Ausnehmung / Bohrung für eine Diode, bevorzugt in jeder der einander gegenüberiiegenden Teilwände eine Diode angeordnet ist. So können bei viereckigem Querschnitt vier Dioden vorgesehen sein, bzw. allgemein mindestens so viele Ausnehmungen für Dioden wie der Querschnitt Ecken aufweist.

In besonders bevorzugter Ausgestaltung ist es vorgesehen, dass die Topfwandung im Wesentlichen zylindrisch ausgebildet ist und somit einen im Wesentlichen runden Querschnitt aufweist, insbesondere wobei die optische Achse einer in der Ausnehmung im Topfboden angeordneten Kamera koaxial zur Achse der zylindrischen Topfwandung ist. Es können so in der zylindrischen Topfwandung eine Vielzahl von Ausnehmungen, insbesondere Bohrungen zur Aufnahme von einer Vielzahl von Dioden angeordnet werden, die kreisförmig die optische Achse der Kamera umgeben, insbesondere so dass aus einer Vielzahl von Richtungen eine zentrisch / mittig, insbesondere auf der optischen Achse angeordnete Markierung beleuchtet werden kann. Hierbei können die Ausnehmungen alle zueinander den gleichen Winkelabstand aufweisen, so dass die maximale Anzahl von Dioden nur durch den Umfang der Topfwandung und die Breitenausdehnung der Dioden gegeben ist.

Sehr vorteilhaft bei der Erfindung ist es, wenn die Querschnittsfläche der Topfwandung, welche die Topföffnung umgibt oder ein an der Topföffnung angeordnetes Element eine insbesondere rahmenförmige oder ringförmige Auflagefläche bildet, die auf einen Markierungsträger aufsetzbar ist, insbesondere wobei der Erfassungsbereich der Kamera im Wesentlichen derart gewählt ist, dass der von der Auflagefläche umgebene Bereich der Oberfläche des Markierungsträgers im Kamerabild abbildbar ist. So kann bei einer solchen Konstruktion die Vorrichtung insbesondere mit der Hand mit dieser genannten Auflagefläche auf die Oberfläche eines Markierungsträgers aufgedrückt werden, insbesondere wobei automatisch der richtige Abstand zur Kamera und damit ein optimal fokussiertes Bild erreicht wird, weil die Topftiefe, ggfs plus Länge eines am Aufnahmeelement angeordneten Elementes der Brennweite der Kamera entspricht.

Eine optimale Beleuchtung kann dabei weiterhin erzielt werden, wenn jede in dem Aufnahmeelement angeordnete Diode in Richtung der optischen Achse der Kamera im Wesentlichen denselben Abstand zur Kamera und zur Auflagefläche hat.

In weiterer konstruktiver Fortbildung der Erfindung kann im Aufnahmeelement wenigstens eine Öffnung und/oder Bohrung und/oder Kanal zur Führung von Kabeln und oder zur Aufnahme von einem Auslösetaster angeordnet sein, insbesondere wobei ein Auslösetaster nahe der Auflagefläche angeordnet ist. So kann das Aufnahmeelement oder eine dieses umgebende Hülse ein mit der Hand greifbares Gehäuse bilden welches ergonomisch gut bedienbar ist, da es zwischen Daumen und den restlichen Fingern ergriffen werden kann, wobei weiterhin z.B. mit dem Daumen der Taster bedienbar ist, durch den wenigstens eine Kameraaufnahme ausgelöst wird. Hierbei kann es vorgesehen sein, dass die Dioden zumindest zum Teil kontinuierlich leuchten, oder dann auch erst bei Tasterbedienung die Beleuchtung eingeschaltet und wenigstens ein Bild aufgenommen wird, welches einer Bildverarbeitung zugeführt wird, um die Markierungsinformationen auszuwerten.

Die Dioden, z.B. LEDs können dabei geeignet sein, jegliche gewünschte Lichtwellenlänge abzustrahlen, die z.B. an die jeweilige Markierung angepasst sein kann. Hier können in der Vorrichtung ggfs verschiedene Dioden zu verschiedenen Lichtwellenlängen vorgesehen sein, die je nach Anwendung auswählbar sind. Z.B. kann in der Ringanordnung jede zweite Beleuchtungsvorrichtung eine andere Wellenlänge abstrahlen.

In einer Ausführung der Erfindung kann es bevorzugt vorgesehen sein, dass mittels wenigstens einer bevorzugt aller Dioden insbesondere einer Leuchtdiode ultraviolettes Licht abstrahlbar ist.

Hierdurch können Markierungen gelesen werden von Float-Glasscheiben, die hintereinander gestellt ähnliche Markierungen an derselben Stelle enthalten. Diese Markierungen überlagern sich, da das Glas transparent ist und sind damit nicht ohne weiteres decodierbar. Wird hier eine Beleuchtung z.B. mit LEDs mit hohem UV-Anteil und bevorzugt mit einem Kantenfilter vor der Kamera verwendet, so kann, da Glas das UV-Licht absorbiert, jeweils nur die Markierung der ersten Scheibe erfasst werden.

In einer weiteren Ausführung kann es vorgesehen sein, dass mit Bezug auf alle vorher genannten Ausführungen in einem Abstand zur Fokusebene der Kamera, die in der Ebene der Auflagefläche / Topföffnung der Vorrichtung liegt, eine Abdeckung angeordnet ist, welche den Erfassungsbereich, bevorzugt die Topföffnung überdeckt. Diese Abdeckung kann an der Vorrichtung, z.B. an der Topfwandung befestigt sein, oder mit dieser einstückig sein. Der Abstand zwischen der Abdeckung und der Fokusebene der Kamera ist derart gewählt, dass er größer gleich der Dicke einer Glasscheibe ist, von der eine Markierung gelesen werden soll.

So kann eine solche Vorrichtung seitlich über die Kante einer Glasscheibe geschoben und mit der Auflagefläche zur Anlage gebracht werden. Eine Markierung wird so von der Kameraseite beleuchtet, wobei Umgebungslicht von der Scheibenrückseite durch die Abdeckung abgeschirmt wird und so nochmals der Kontrast erhöht wird.

Realisiert werden kann dies auch dadurch, dass das vorgenannte Aufnahmeelement als ein beidseitig geschlossenes Hohlprofil, insbesondere Zylinder ausgebildet ist mit der vorbeschriebenen Anordnung von Dioden. Hierbei ist in einem Boden des Hohlprofils eine Ausnehmung für die Kamera angeordnet, wobei der andere Boden die vorgenannte Abdeckung bildet. Senkrecht zur optischen Achse kann das Hohlprofil einen Schlitz aufweisen, der wenigstens die Breite einer zu untersuchenden Scheibe aufweist und bis auf die Wandstärke der Wandung des Hohlprofils über den gesamten Querschnitt des Hohlprofils verläuft, so dass die Vorrichtung über die Scheibekante auf die Scheibe aufgeschoben werden kann und bei einer optimalen Abdunklung gegenüber der Umgebung für eine reflexfreie Beleuchtung sorgt.

Mit einer derartigen Vorrichtung ist sowohl eine manuelle als auch eine maschinelle Handhabung möglich, wobei bei letzterer ein Andrücken der Vorrichtung an einen Markierungsträger mittels einer dafür vorgesehenen Andrückvorrichtung erfolgen kann oder aber die Vorrichtung, wenn ein Andrücken nicht vorgesehen ist automatisch im Fokusabstand der Kamera zum Markierungsträger positioniert wird. Ein Ausführungsbeispiel der Erfindung ist in den nachfolgenden Figuren dargestellt. Es zeigen:
- Figur 1:: das Prinzip der Erfindung,
- Figur 2:: ein Aufnahmeelement.

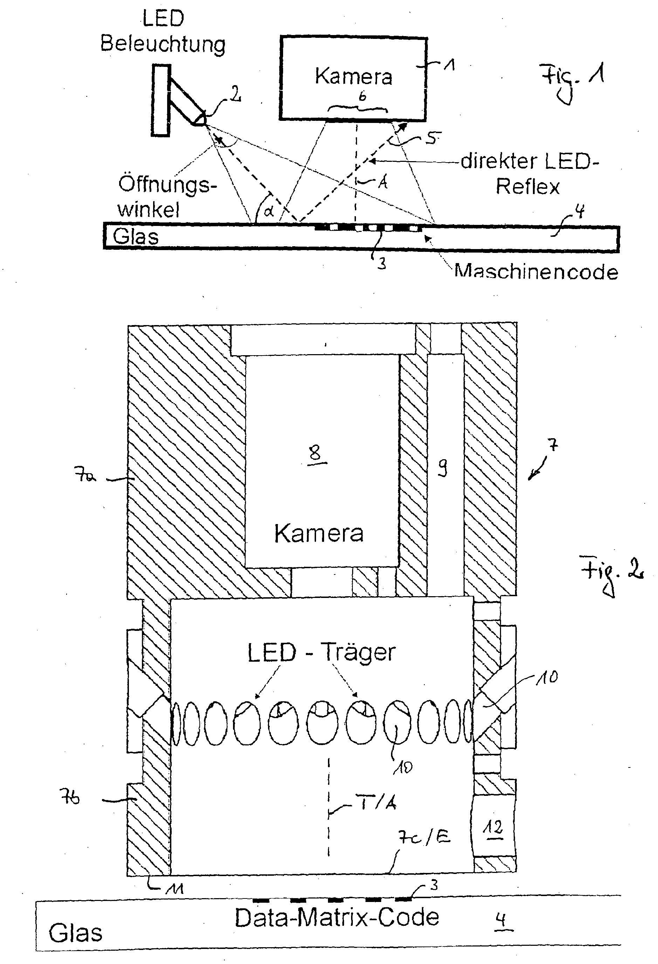

Die Figur 1 zeigt das Prinzip der Erfindung. Die Vorrichtung umfasst eine Kamera 1, sowie wenigstens eine Beleuchtungsvorrichtung 2, z.B. wenigstens eine Leuchtdiode. Diese ist in einem radialen Abstand zur optischen Achse A der Kamera 1 angeordnet und beleuchtet den Maschinencode einer Markierung 3 in der Scheibe 4 unter einen Winkel α von hier ca. 45 Grad. Dadurch liegt bei dem gewählten Abstand der Kamera 1 vom Glas 4 der direkte Lichtreflex 5 der Leuchtdiode 2 außerhalb der Objektivöffnung 6 der Kamera 1. Somit wird verhindert, dass der Reflex 5 das Bild der Markierung 3, welches von der Kamera 1 aufgenommen wird überlagert.

Da die Beleuchtungsvorrichtung 2 einen Öffnungswinkel bei der Lichtemission aufweist wird die Markierung 3 vollflächig beleuchtet. Das von der Markierung 3 gestreute Licht gelangt in die Kamera 1 und führt zur Abbildung der Markierung. Da eine Lichtstreuung nur in den Markierungsbereichen erfolgt, jedoch nicht an der feuerpolierten Oberfläche des Floatglases 4 ist das Glas selbst für die Kamera dunkel in der Erscheinung. Somit ergibt sich ein optimaler Kontrast bei der Aufnahme der Markierung, die sodann mittels einer Bildverarbeitungssoftware ausgewertet werden kann.

Die Figur 2 zeigt ein erfindungsgemäßes Aufnahmeelement 7 der Vorrichtung. Das Aufnahmeelement ist ein etwa auf den Kopf stehender Topf, wobei im Boden 7a des Topfes eine Ausnehmung 8 als zentrische Bohrung in Richtung der Topfachse T angeordnet ist zur Aufnahme einer nicht gezeigten Kamera oder eines Kameramoduls. Neben der Bohrung 8 kann eine außerzentrische Bohrung 9 für Kabel zur Stromversorgung und für Daten der Kamera angeordnet sein.

Der Topf weist weiterhin eine Topfwandung 7b auf, die hier im Querschnitt rund ausgebildet ist, so dass das Aufnahmeelement 7 einen oben geschlossenen Zylinder bildet. Etwa mittig bezogen auf die Topftiefe ist eine Vielzahl von Bohrungen 10 in der Topfwandung 7b angeordnet, die unter einen Winkel α von ca. 45 Grad verlaufen, was dem zuvor genannten Winkel in der Figur 1 entspricht.

Die Bohrungen 10 dienen zur Aufnahme von Leuchtdioden, die unter diesem Winkel α mit Ihrem Licht die Ebene E beleuchten, die durch die Topföffnung 7c gegeben ist. Diese Ebene E ist die Fokusebene der Kamera, so dass die Markierung 3 im Glas 4 automatisch im Fokus liegt, wenn das Aufnahmeelement mit darin aufgenommener Kamera auf das Glas aufgestellt wird. Hierzu hat die Topföffnung 7c einen umlaufenden stirnseitigen Bereich 11, der als Auflagefläche dient und durch die Querschnittsfläche der Topfwandung 7b gebildet wird.

Nahe der Auflagefläche 11 ist in der Topfwandung 7b noch eine Bohrung 12 angeordnet, in die ein Taster eingesetzt werden kann zur Bedienung der Vorrichtung und Auslösung einer Kameraaufnahme.

Das hier dargestellte Aufnahmeelement kann seinerseits noch in einer Hülse angeordnet werden, welche das äußere Gehäuse der Vorrichtung bildet.

Alle hier genannte Ausführungen des Ausführungsbeispiels und des allgemeinen Teils sind fakultativ und können beliebig miteinander kombiniert oder alternativ eingesetzt werden.

## Patentansprüche

1. System mit folgenden Merkmalen:
ein topfförmiges Aufnahmeelement (7) mit einem Topfboden (7a), einer zylindrischen Topfwandung (7b) und einer Topföffnung (7c),
im Topfboden 7a) ist in einer Ausnehmung (8) eine Kamera mit einer Fokusebene angeordnet
in der zylindrischen Topfwandung (7b) ist eine Vielzahl von Bohrungen (10) unter einem Winkel (α) von 0 bis 80 Grad zur Ebene (E) der Topföffnung (7c) angeordnet, in denen Leuchtdioden oder Laserdioden aufgenommen sind, die kreisförmig die optische Achse (A,T) der Kamera umgeben
die Fokusebene der Kamera liegt in der Ebene (E) der Topföffnung
eine auf einem transparenten Träger angeordnete mit Metallpartikeln hergestellte Markierung liegt in der Fokusebene der Kamera,
der Winkel der Beleuchtung zur optischen Achse durch die Dioden, der Abstand der Kamera zur Oberfläche des Markierungsträgers und der Abstand der Dioden zur optischen Achse der Kamera sind derart gewählt,
dass jeder an der Oberfläche des Markierungsträgers erzeugte direkte Lichtreflex zumindest neben der im Kamerabild dargestellten Markierung angeordnet ist.

2. System nach Anspruch 1, **dadurch gekennzeichnet, dass** der Winkel (α) jeder Diode (2) zur Oberfläche des Markierungsträgers (4) gleich ist, so dass die Mittenstrahlen (5) der Beleuchtungskegel jeder Diode (2) die optische Achse (A) der Kamera (1) in demselben Punkt schneiden.

3. System nach einem der vorherigen Ansprüche, **dadurch gekennzeichnet, dass** die optische Achse (A) einer in der Ausnehmung (8) im Topfboden (7a) angeordneten Kamera koaxial zur Achse (T) der zylindrischen Topfwandung (7b) ist.

4. System nach einem der vorherigen Ansprüche, **dadurch gekennzeichnet, dass** die Querschnittsfläche (11) der Topfwandung (7b), welche die Topföffnung (7c) umgibt oder ein an der Topföffnung (7c) angeordnetes Element eine ringförmige Auflagefläche (11) bildet, die auf einen Markierungsträger (4) aufsetzbar ist, wobei der Erfassungsbereich der Kamera (1) im Wesentlichen derart gewählt ist, dass der von der Auflagefläche umgebene Bereich der Oberfläche des Markierungsträgers (4) im Kamerabild abbildbar ist.

5. System nach einem der vorherigen Ansprüche, **dadurch gekennzeichnet, dass** jede in dem Aufnahmeelement angeordnete Diode (2) bzw. Ausnehmung (10) in Richtung der optischen Achse der Kamera (A) im Wesentlichen denselben Abstand zur Kamera und zur Auflagefläche hat.

6. System nach einem der vorherigen Ansprüche, **dadurch gekennzeichnet, dass** im Aufnahmeelement (7) wenigstens eine Öffnung und/oder Bohrung (9,12) und/oder Kanal zur Führung von Kabeln und oder zur Aufnahme von einem Auslösetaster angeordnet sind, insbesondere wobei ein Auslösetaster nahe der Auflagefläche (11) angeordnet ist.

7. System nach einem der vorherigen Ansprüche, **dadurch gekennzeichnet, dass** das Aufnahmeelement (7) oder eine dieses umgebende Hülse ein mit der Hand greifbares Gehäuse bildet.

8. System nach einem der vorherigen Ansprüche, **dadurch gekennzeichnet, dass** mittels wenigstens einer Leuchtdiode ultraviolettes Licht abstrahlbar ist.

9. System nach einem der vorherigen Ansprüche, **dadurch gekennzeichnet, dass** an der Vorrichtung eine Abdeckung in einem Abstand zur Fokusebene der Kamera angeordnet ist zur Abschirmung von Umgebungslicht von der Rückseite eines Markierungsträgers.

10. Verfahren zur Erfassung und/oder Erkennung von Markierungen, bei der eine beleuchtete Markierung mit einer Kamera eines Systems nach einem der vorherigen Ansprüche 1 bis 9 aufgenommen wird, **dadurch gekennzeichnet, dass** zur Erfassung und/oder Erkennung von Markierungen aus metallpartikelhaltigen Glasbereichen (3) auf/an/in einer transparenten Glasscheibe (4) eine Markierung von einer Vielzahl die optische Achse (A) der Kamera (1) ringförmig umgebenden Dioden (2) so beleuchtet wird, dass die durch die Dioden an der Oberfläche der Glasscheibe erzeugten Lichtreflexe zumindest neben der im Kamerabild dargestellten Markierung oder ausserhalb des Erfassungsbereiches der Kamera angeordnet sind und in Bereichen einer Markierung die Metallpartikel das Licht in Richtung der Kamera streuen, so dass die Markierung im Kamerabild invertiert erscheint als helle Markierung auf dunklem Hintergrund.

11. Verfahren nach Anspruch 10, **dadurch gekennzeichnet, dass** Umgebungslicht, welches von der Rückseite eines transparenten Markierungsträgers den Markierungsträger durchleuchtet mittels einer Abdeckung abgeschirmt wird, welche bei der Aufnahme einer Abbildung einer Markierung den Markierungsträger im Bereich des Erfassungsbereichs der Kamera rückseitig überdeckt.

12. Verfahren nach einem der vorherigen Ansprüche 10 oder 11, **dadurch gekennzeichnet, dass** eine Beleuchtung mit zumindest überwiegend ultraviolettem Licht erfolgt, insbesondere wobei Reflexe von ultraviolettem Licht mittels eines Kantenfilters vor der Kamera blockiert werden.

## Claims

1. System having the following features:
a pot-shaped holding element (7) having a pot bottom (7a), a cylindrical pot wall (7b) and a pot opening (7c),
a camera with a focal plane is arranged in a recess (8) in the pot bottom (7a),
arranged in the cylindrical pot wall (7b) at an angle (α) of 0 to 80 degrees to the plane (E) of the pot opening (7c) are a multiplicity of bores (10) in which there are accommodated light-emitting diodes or laser diodes which surround the optical axis (A, T) of the camera in circular fashion,
the focal plane of the camera lies in the plane (E) of the pot opening,
a marking produced by metal particles arranged on a transparent carrier lies in the focal plane of the camera,
the angle of the illumination to the optical axis through the diodes, the distance of the camera from the surface of the marking carrier, and the distance of the diodes from the optical axis of the camera are selected in such a way
that each direct light reflection generated at the surface of the marking carrier is at least arranged near the marking shown in the camera image.

2. System according to Claim 1, **characterized in that** the angle (α) for each diode (2) in relation to the surface of the marking carrier (4) is the same such that the central rays (5) of the illumination cones of each diode (2) intersect the optical axis (A) of the camera (1) at the same point.

3. System according to one of the preceding claims, **characterized in that** the optical axis (A) of a camera arranged in the recess (8) in the pot bottom (7a) is coaxial with the axis (T) of the cylindrical pot wall (7b).

4. System according to one of the preceding claims, **characterized in that** the cross-sectional surface (11) of the pot wall (7b), which surrounds the pot opening (7c), or an element arranged at the pot opening (7c), forms an annular bearing surface (11) which can be mounted on a marking carrier (4), the coverage range of the camera (1) substantially being selected in such a way that it is possible for the region of the surface of the marking carrier (4) surrounded by the bearing surface to be imaged in the camera image.

5. System according to one of the preceding claims, **characterized in that** each diode (2) or recess (10) arranged in the holding element is at the same distance from the camera and from the bearing surface in the direction of the optical axis of the camera (A).

6. System according to one of the preceding claims, **characterized in that** there are arranged in the holding element (7) at least one opening and/or bore (9, 12) and/or channel for guiding cables and/or for accommodating a release key, in particular a release key being arranged near the bearing surface (11).

7. System according to one of the preceding claims, **characterized in that** the holding element (7) or a sleeve surrounding the latter forms a housing which can be gripped by hand.

8. System according to one of the preceding claims, **characterized in that** ultraviolet light can be emitted by means of at least one light-emitting diode.

9. System according to one of the preceding claims, **characterized in that** a cover is arranged at the apparatus at a distance from the focal plane of the camera in order to screen out ambient light from the rear side of a marking carrier.

10. Method for detecting and/or recognizing markings, in the case of which an illuminated marking is recorded with the aid of a camera of a system according to one of the preceding Claims 1 to 9, **characterized in that** in order to detect and/or recognize markings from glass regions (3), containing metal particles, on/at/in a transparent glass pane (4) a marking is illuminated by a multiplicity of diodes (2) annularly surrounding the optical axis (A) of the camera (1) so that the light reflections generated at the surface of the glass pane by the diodes are at least arranged near the marking shown in the camera image or outside the coverage range of the camera, and in regions of a marking the metal particles scatter the light in the direction of the camera such that the marking appears inverted in the camera image as a bright marking on a dark background.

11. Method according to Claim 10, **characterized in that** ambient light which transilluminates a transparent marking carrier from the rear side thereof is screened out by means of a cover which during the recording of an image of a marking covers over the marking carrier from the rear in the area of the coverage range of the camera.

12. Method according to either of the preceding Claims 10 and 11, **characterized in that** illumination is performed with at least predominantly ultraviolet light, in particular reflections of ultraviolet light being blocked by means of an edge filter in front of the camera.

## Revendications

1. Système présentant les caractéristiques suivantes :
un réceptacle en forme de pot (7) comportant un fond de pot (7a), une paroi de pot cylindrique (7b) et une ouverture de pot (7c),
une caméra ayant un plan focal est disposée dans un évidement (8) ménagé dans le fond de pot (7a),
une pluralité de perforations (10) dans lesquelles sont logées des diodes électroluminescentes ou des diodes laser qui entourent de manière circulaire l'axe optique (A, T) de la caméra sont disposées dans la paroi de pot (7b) cylindrique, selon un angle (α) de 0 à 80 degrés par rapport à un plan (E) de l'ouverture de pot (7c),
le plan focal de la caméra se situe dans le plan (E) de l'ouverture de pot,
un marquage réalisé au moyen de particules métalliques et disposé sur un support transparent se situe dans le plan focal de la caméra,
l'angle d'éclairement par rapport à l'axe optique produit par les diodes, la distance de la caméra à la surface du support de marquage et la distance des diodes à l'axe optique de la caméra sont choisis de telle sorte que
chaque réflexion de lumière directement générée sur la surface du support de marquage se produit au moins à côté du marquage apparaissant dans l'image de la caméra.

2. Système selon la revendication 1, **caractérisé en ce que** les angles (α) de chacune des diodes (2) par rapport à la surface du support de marquage (4) sont les mêmes, de telle sorte que les rayons médians (5) du cône d'éclairement de chacune des diodes (2) interceptent l'axe optique (A) de la caméra (1) en un même point.

3. Système selon l'une quelconque des revendications précédentes, **caractérisé en ce que** l'axe optique (A) d'une caméra disposée dans l'évidement (8) ménagé dans le fond de pot (7a) est coaxial par rapport à l'axe (T) de la paroi de pot cylindrique (7b).

4. Système selon l'une quelconque des revendications précédentes, **caractérisé en ce que** la superficie de la section transversale (11) de la paroi de pot (7b) qui entoure l'ouverture de pot (7c) ou un élément disposé sur l'ouverture de pot (7c) forme une surface d'appui annulaire (11) qui peut être placée sur un support de marquage (4), la zone de détection de la caméra (1) étant essentiellement sélectionnée de telle manière que l'image de la zone entourée par la surface d'appui de la surface du support de marquage (4) puisse être formée dans l'image de la caméra.

5. Système selon l'une quelconque des revendications précédentes, **caractérisé en ce que** chaque diode (2) disposée dans le réceptacle ou chaque évidement (10) présente essentiellement la même distance par rapport à la caméra et à la surface d'appui dans la direction de l'axe optique de la caméra (A).

6. Système selon l'une quelconque des revendications précédentes, **caractérisé en ce qu'**il est prévu dans le réceptacle (7) au moins une ouverture et/ou une perforation (9, 12) et/ou un canal destiné au passage de câbles et/ou à la mise en place d'un bouton de déclenchement, un bouton de déclenchement étant notamment disposé à proximité de la surface d'appui (11).

7. Système selon l'une quelconque des revendications précédentes, **caractérisé en ce que** le réceptacle (7) ou un manchon entourant ce dernier forme un boîtier pouvant être saisi à la main.

8. Système selon l'une quelconque des revendications précédentes, **caractérisé en ce que** de la lumière ultraviolette peut être émise au moyen d'au moins une diode électroluminescente.

9. Système selon l'une quelconque des revendications précédentes, **caractérisé en ce qu'**un capuchon est disposé sur le dispositif à une certaine distance du plan focal de la caméra pour l'occultation de la lumière ambiante de la face arrière d'un support de marquage.

10. Procédé de détection et/ou de reconnaissance de marquages, dans lequel un marquage éclairé est acquis au moyen d'une caméra d'un système selon l'une quelconque des revendications 1 à 9 précédentes, **caractérisé en ce que** pour détecter et/ou reconnaître des marquages constitués de zones de verre (3) contenant des particules métalliques présentes sur/dans une lame de verre transparente (4), un marquage est éclairé par une pluralité de diodes (2) entourant de manière annulaire l'axe optique (A) de la caméra (1) de telle manière que les réflexions de lumière générées par les diodes (2) sur la surface de la lame de verre se produisent au moins à côté du marquage apparaissant dans l'image de la caméra ou à l'extérieur de la zone de détection de la caméra et que les particules métalliques diffusent la lumière dans la direction de la caméra dans la région d'un marquage de telle manière que le marquage apparaisse inversé dans l'image de la caméra sous la forme d'un marquage clair sur fond sombre.

11. Procédé selon la revendication 10, **caractérisé en ce que** la lumière ambiante qui éclaire en transparence le support de marquage depuis la face arrière d'un support de marquage transparent soit occultée au moyen d'un capuchon qui recouvre le support de marquage dans la région de la zone de détection de l'arrière de la caméra lors de l'acquisition d'une image d'un marquage.

12. Procédé selon l'une quelconque des revendications 10 ou 11 précédentes, **caractérisé en ce qu'**un éclairement est réalisé au moyen d'une lumière au moins principalement ultraviolette, les réflexions de lumière ultraviolette étant notamment occultées au moyen d'un filtre de bord placé devant la caméra.
